(19) Europäisches Patentamt
European Patent Office
Office européen des brevets

(11) **EP 2 091 802 B1**

(12) **FASCICULE DE BREVET EUROPEEN**

(45) Date de publication et mention de la délivrance du brevet:
**01.09.2010 Bulletin 2010/35**

(51) Int Cl.:
***B62D 6/00*** *(2006.01)*      ***B62D 6/04*** *(2006.01)*
***B62D 7/15*** *(2006.01)*

(21) Numéro de dépôt: **07858642.7**

(22) Date de dépôt: **22.10.2007**

(86) Numéro de dépôt international:
**PCT/FR2007/052220**

(87) Numéro de publication internationale:
**WO 2008/062122 (29.05.2008 Gazette 2008/22)**

(54) **SYSTEME ET PROCEDE DE COMMANDE DE BRAQUAGE DES ROUES ARRIERE D'UN VEHICULE AUTOMOBILE MUNI DE QUATRE ROUES DIRECTRICES**

VERFAHREN ZUR STEUERUNG DER HINTERRÄDER EINES FAHRZEUGS MIT ALLRADLENKUNG

SYSTEM AND METHOD FOR CONTROLLING THE STEERING OF THE REAR WHEELS OF A VEHICLE COMPRISING FOUR STEERING WHEELS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.11.2006 FR 0655014**

(43) Date de publication de la demande:
**26.08.2009 Bulletin 2009/35**

(73) Titulaire: **Renault S.A.S.**
**92100 Boulogne-Billancourt (FR)**

(72) Inventeurs:
• **GUEGAN, Stéphane**
**78000 Versailles (FR)**
• **POTHIN, Richard**
**78760 Jouars-Ponchartrain (FR)**

(56) Documents cités:
**EP-A- 1 386 805        EP-A- 1 426 269**
**EP-A2- 1 234 741       WO-A-2005/095133**
**GB-A- 2 367 043        US-A1- 2003 065 430**
**US-A1- 2004 254 707**

**Description**

La présente invention relève du domaine des systèmes de commande de véhicules terrestres, en particulier de véhicules automobiles à roues.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule.

La demande de brevet européen EP 0 376 306 porte sur un système de commande pour contrôler le caractère sous-vireur ou sur-vireur d'un véhicule présentant des suspensions pour les roues avant et arrière. Toutefois, un tel système présente un coût élevé pour des résultats mitigés. En outre, un tel système ne tient pas compte d'un éventuel système de quatre roues directrices installé sur le véhicule de manière à diminuer les risques de décollement des roues et de renversement du véhicule.

En effet, certaines situations de conduite peuvent engendrer un décollement d'une ou des deux roues intérieures à un virage effectué par le véhicule. Certaines situations peuvent même entraîner un renversement du véhicule.

La demande de brevet français FR 0314 929 et la demande de brevet européen EP 1 544 080 portent sur un procédé et un système de commande du braquage de roues arrière directrices d'un véhicule automobile à au moins trois roues directrices. En fonction de l'angle de braquage d'une roue avant, de données de déplacement du véhicule comprenant la dérive au centre de gravité du véhicule, et d'une consigne intérieure de braquage de roues arrière, une consigne actuelle de braquage de roue arrière est élaborée. Les lois de commande décrites ne tiennent pas compte des risques de renversement du véhicule.

Le document EP 1 386 805 A décrit un système et un procédé de commande de braquage selon le préambule des revendications 1 et 9. L'invention vise à remédier à ces inconvénients, et propose un système et un procédé de commande évolués permettant d'améliorer le comportement du véhicule, et de réduire sensiblement les risques de renversement du véhicule et de décollement d'une ou des deux roues intérieures à un virage.

Selon un aspect de l'invention, il est proposé un système de commande de braquage des roues arrière d'un véhicule muni de quatre roues directrices, comprenant des moyens d'élaboration d'une consigne de braquage des roues arrière du véhicule. Le système comprend des moyens d'élaboration d'une correction de ladite consigne de braquage des roues arrière à partir de premiers paramètres comprenant un indicateur de risque de décollement d'une roue intérieure à un virage effectué par le véhicule.

L'élaboration d'une correction, appliquée à la consigne de braquage élaborée avec une stratégie en boucle ouverte, permet de tenir compte d'un niveau de risque de décollement d'une roue intérieure à un virage effectué par le véhicule, pouvant entraîner un renversement du véhicule.

Le système comprend, en outre, des moyens de détection d'un risque de décollement d'une roue intérieure à un virage effectué par le véhicule, délivrant en sortie ledit indicateur de risque de décollement d'une roue intérieure au virage. Le système comprend, en outre, des moyens de détermination des efforts verticaux appliqués aux roues du véhicule à partir de deuxièmes paramètres comprenant l'accélération transversale du véhicule transmise par rétroaction par des moyens de détermination de l'accélération transversale du véhicule. Le système comprend également des moyens de sélection du plus petit des efforts verticaux appliqués aux roues intérieures audit virage, et des moyens de comparaison de ladite sélection avec trois seuils.

La rétroaction de l'accélération transversale du véhicule permet d'avoir une précision améliorée dans le calcul du correctif.

Selon un mode de réalisation, lesdits premiers paramètres comprennent, en outre, la vitesse du véhicule transmise par des moyens de détermination de la vitesse du véhicule.

La prise en compte de la vitesse du véhicule permet d'améliorer la précision de fonctionnement du système.

Selon un mode de réalisation, lesdits deuxièmes paramètres comprennent, en outre, l'accélération longitudinale du véhicule, transmise par des moyens de détermination de l'accélération longitudinale du véhicule.

La précision de fonctionnement du système est ainsi améliorée.

Dans un mode de réalisation, lesdits trois seuils dépendent de la vitesse du véhicule.

La précision de fonctionnement du système est ainsi améliorée.

Dans un mode de réalisation, ledit indicateur comprend cinq valeurs de risque de décollement d'une roue intérieure à un virage, correspondant respectivement à un faible risque de décollement d'une roue intérieure à un virage à gauche, un risque important de décollement d'une roue intérieure à un virage à gauche, un faible risque de décollement d'une roue intérieure à un virage à droite, un risque important de décollement d'une roue intérieure à un virage à droite, et aucun risque de décollement d'une roue intérieure à un virage.

Ainsi, le fonctionnement du système va tenir compte du risque de décollement d'une roue intérieure à un virage.

Dans un mode de réalisation, lesdits moyens d'élaboration d'une correction de ladite consigne de braquage sont adaptés pour élaborer une correction de ladite consigne de braquage de sorte que :

- lorsque lesdits moyens de détection d'un risque de décollement détectent un risque important de décollement d'une roue intérieure à un virage à gauche, lesdits moyens d'élaboration d'une correction de ladite consigne de braquage élaborent une correction augmentant avec l'écoulement du temps,
- lorsque lesdits moyens de détection d'un risque de décollement détectent un risque important de décollement d'une roue intérieure à un virage à droite, lesdits moyens d'élaboration d'une correction de ladite consigne de braquage élaborent une correction diminuant avec l'écoulement du temps,
- lorsque lesdits moyens de détection d'un risque de décollement détectent un faible risque de décollement d'une roue intérieure à un virage à droite ou à gauche, lesdits moyens d'élaboration d'une correction de ladite consigne de braquage élaborent une correction stable avec l'écoulement du temps, et
- lorsque lesdits moyens de détection d'un risque de décollement ne détectent aucun risque de décollement d'une roue intérieure à un virage à droite ou à gauche, lesdits moyens d'élaboration d'une correction de ladite consigne de braquage élaborent une correction s'annulant avec l'écoulement du temps.

Ainsi, suivant les risques encourus par le véhicule et les occupants, la correction de la consigne de braquage est adaptée au niveau de risque de décollement d'une roue intérieure au virage, et permet d'adapter précisément la correction à effectuer. L'invention permet d'appliquer une correction de consigne de braquage des roues arrière bien adaptée à la situation de conduite.

Selon un mode de réalisation, lesdits moyens d'élaboration d'une correction de ladite consigne de braquage sont adaptés pour élaborer une correction de ladite consigne de braquage lorsque lesdits moyens de détection d'un risque de décollement détectent un risque important de décollement d'une roue intérieure à un virage à gauche ou à droite à condition que la vitesse du véhicule soit supérieure à une vitesse de seuil.

La précision de fonctionnement du système est ainsi améliorée, car en dessous d'une vitesse de seuil, aucun risque de décollement d'une roue intérieure à un virage ne sera détecté.

Selon un autre aspect de l'invention, il est également proposé un véhicule automobile comprenant un châssis, et muni de quatre roues directrices reliées élastiquement au châssis, et un système de commande de braquage des roues arrière tel que décrit précédemment.

Selon un autre aspect de l'invention, il est également proposé un procédé de commande de braquage des roues arrière d'un véhicule automobile muni de quatre roues directrices, dans lequel on élabore une consigne de braquage des roues arrière du véhicule. En outre, on élabore une correction de ladite consigne de braquage des roues arrière à partir de premiers paramètres comprenant un niveau de risque de décollement d'une roue intérieure à un virage effectué par le véhicule.

On détecte un risque de décollement d'une roue intérieure à un virage effectué par le véhicule, on détermine des efforts verticaux appliqués aux roues du véhicule à partir de deuxièmes paramètres comprenant l'accélération transversale du véhicule transmise par rétroaction, on sélectionne le plus petit des efforts verticaux appliqués aux roues intérieures audit virage, et on compare ladite sélection avec trois seuils prédéterminés.

La présente invention sera mieux comprise à l'étude de la description détaillée de quelques modes de réalisation pris à titre d'exemples nullement limitatifs et illustrés par les dessins annexés, sur lesquels :

- la figure 1 est une vue schématique d'un véhicule équipé d'un système de commande selon un aspect de l'invention ;
- la figure 2 est une vue schématique d'un mode de réalisation d'un système selon un aspect de l'invention ; et
- la figure 3 est un schéma logique illustrant l'évolution du niveau de risque de décollement d'une roue intérieure à un virage effectué par les moyens de détection d'un risque de décollement d'une roue intérieure à un virage.

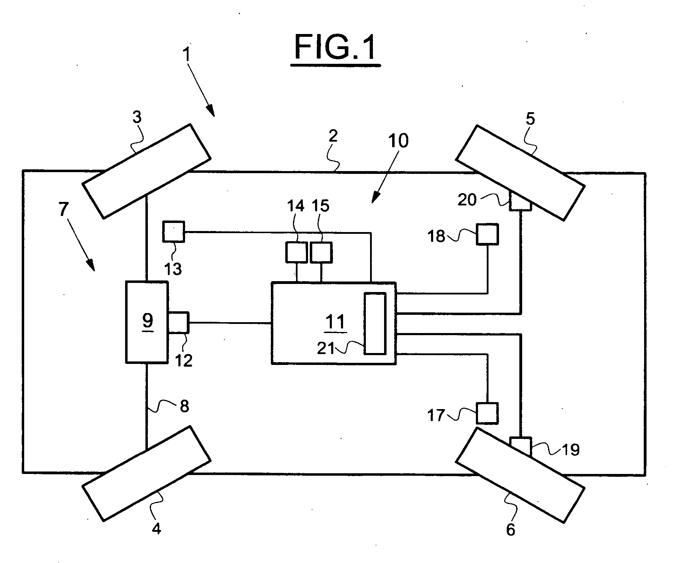

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension non représenté.

Le véhicule 1 se complète par un système de direction comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande d'aide au braquage 10 comprend une unité de commande électronique 11, un capteur 12 de la position de braquage des roues avant 3 et 4, par exemple positionné sur l'actionneur 9, un capteur 13 de la vitesse de rotation des roues avant permettant de déterminer la vitesse V du véhicule, et des capteurs 14 et 15 respectivement adaptés pour mesurer l'accélération transversale et l'accélération longitudinale du véhicule 1. En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique.

L'unité de commande électronique 11 peut être réalisée sous la forme d'un microprocesseur équipé d'une mémoire vive, d'une mémoire morte, d'une unité centrale et d'interfaces entrée/sortie permettant de recevoir des informations des capteurs et d'envoyer des instructions, notamment aux actionneurs 19 et 20.

En variante, les capteurs de mesure peuvent être remplacés par des modules d'estimation. L'unité de commande électronique 11 comprend en outre un module de commande 21 de braquage des roues arrière 5, 6 du véhicule.

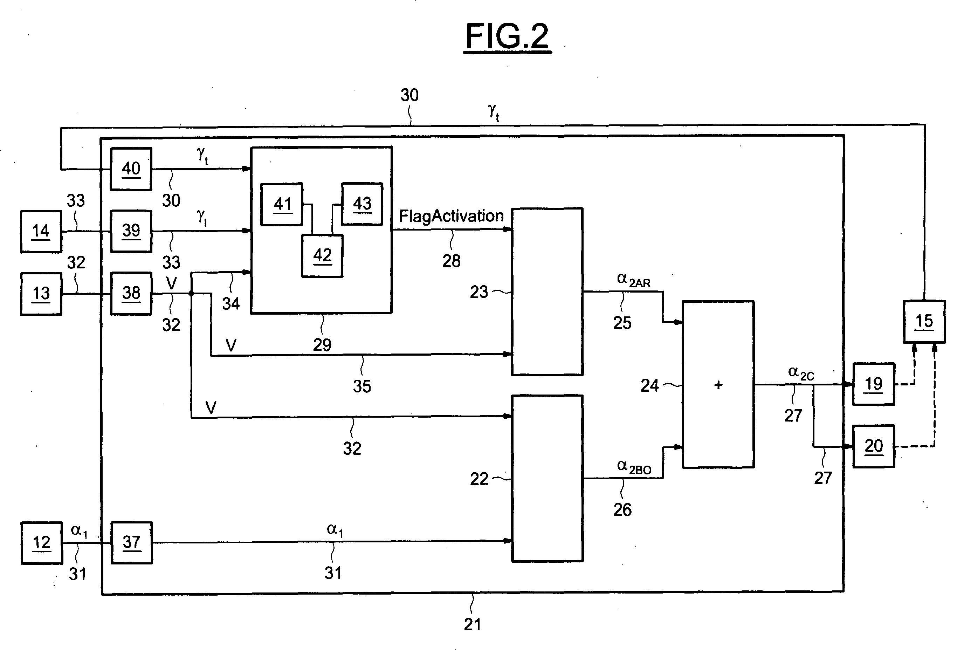

Le module de commande de braquage 21 des roues arrière 5 et 6 est représenté plus en détails sur la figure 2. Le module de commande 21 comprend un module d'élaboration 22 d'une consigne de braquage $\alpha_{2BO}$ des roues arrière 5 et 6 du véhicule par une stratégie en boucle ouverte. Le module de commande 21 comprend en outre un module d'élaboration 23 d'une correction $\alpha_{2AR}$ de la consigne de braquage $\alpha_{2BO}$ élaborée par le module d'élaboration 22. Un module d'addition 24 permet d'additionner la consigne de braquage des roues arrière $\alpha_{2BO}$ et la correction $\alpha_{2AR}$ pour délivrer en sortie du.module de commande 21 une consigne de braquage corrigée $\alpha_{2C}$ des roues arrière 5 et 6 du véhicule, par une connexion 27.

Le module d'élaboration 23 de la correction $\alpha_{2AR}$ reçoit en entrée un indicateur FlagActivation de risque de décollement d'une roue intérieure à un virage effectué par le véhicule, par une connexion 28 et délivré par un module de détection 29 d'un risque de décollement d'une roue intérieure à un virage effectué par le véhicule 3. Le module de détection 29 reçoit en entrée l'accélération transversale $\gamma_t$ du véhicule, mesurée au centre de gravité du véhicule, et fournie par le capteur d'accélération transversale 15 par l'intermédiaire d'une connexion 30.

Le module d'élaboration 22 de la consigne de braquage des roues arrière 5 et 6 en boucle ouverte reçoit en entrée, par l'intermédiaire d'une connexion 31, l'angle de braquage $\alpha_l$ que font les roues avant 3 et 4 avec l'axe longitudinal du véhicule, en provenance du capteur 12 de la position de braquage des roues avant 3 et 4. Le module d'élaboration 22 reçoit en outre, par une connexion 32, la vitesse V du véhicule 1 délivrée par le capteur 13. De manière optionnelle, afin d'améliorer la précision de la correction $\alpha_{2AR}$ de la consigne de braquage $\alpha_{2BO}$ des roues arrière 5 et 6, le module de détection 29 d'un risque de décollement d'une roue intérieure à un virage reçoit du capteur 14, par une connexion 33, l'accélération longitudinale $\gamma_l$ du véhicule 1, et reçoit du capteur 13, par une connexion 34, la vitesse V du véhicule 1. En outre, le module d'élaboration 23 d'une correction reçoit également, de manière optionnelle, en entrée, la vitesse V du véhicule 1, délivrée par le capteur 13 par l'intermédiaire d'une connexion 35.

La consigne corrigée $\alpha_{2C}$ est transmise en sortie du module de commande 21, par la connexion 27, aux actionneurs 19 et 20 qui vont alors modifier l'angle de braquage des roues arrière 5 et 6 du véhicule 1. Aussi, le capteur 15 détecte alors une modification,de l'accélération transversale $\gamma_t$ du véhicule, et transmet, par rétroaction, cette nouvelle valeur en entrée du module de détection 29 par la connexion 30.

De manière optionnelle, les signaux transmis par les capteurs 12, 13, 14 et 15 au module de commande 21 peuvent être filtrés, respectivement par des modules de filtrage 37, 38, 39 et 40. Ces modules de filtrage permettent d'améliorer la qualité des données en entrée du système, en limitant les bruits, et ainsi d'améliorer la précision de la commande $\alpha_{2C}$ délivrée en sortie par le module de commande 21.

Le module de détection 29 d'un risque de décollement d'une roue intérieure à un virage effectué par le véhicule, comprend un module de détermination 41 des efforts verticaux appliqués aux roues 3, 4, 5, 6 du véhicule 1 à partir de deuxièmes paramètres comprenant l'accélération transversale $\gamma_t$ du véhicule 1. Le module de détection 29 comprend également un module de sélection 42 du plus petit des efforts verticaux appliqués aux roues intérieures audit virage, et un module de comparaison 43 de ladite sélection avec trois seuils prédéterminés.

Le module de détermination 41 des efforts verticaux appliqués aux roues arrière du véhicule doit tenir compte des équations suivantes :

$$F_{Z4} = -\frac{k_{av}}{e_1}\left(hM\gamma_t\right) \ -\frac{hM\gamma_l}{2L} \ +\frac{L_2Mg}{2L}$$

$$F_{Z3} = +\frac{k_{av}}{e_1}\left(hM\gamma_t\right) \ -\frac{hM\gamma_l}{2L} \ +\frac{L_2Mg}{2L}$$

$$F_{Z6} = -\frac{k_{ar}}{e_2}\left(hM\gamma_t\right) \ +\frac{hM\gamma_l}{2L} \ +\frac{L_1Mg}{2L}$$

$$F_{Z5} = +\underbrace{\frac{k_{ar}}{e_2}\left(hM\gamma_t\right)}_{\text{LATERAL}} + \underbrace{\frac{hM\gamma_l}{2L}}_{\text{LONGITUDINAL}} + \underbrace{\frac{L_1 Mg}{2L}}_{\text{VERTICAL}}$$

dans lesquelles :

| | |
|---|---|
| M(kg) : | Masse totale du véhicule |
| $L_1$(m) : | Distance séparant le centre de gravité du véhicule et l'essieu avant |
| $L_2$(m) : | Distance séparant le centre de gravité du véhicule et l'essieu arrière |
| L(m) : | Empattement du véhicule |
| $\alpha_1$(rad) : | Angle que font les roues avant avec l'axe longitudinal du véhicule |
| $\alpha_2$(rad) : | Angle que font les roues arrière avec l'axe longitudinal du véhicule |
| $\alpha_{2BO}$(rad) : | Consigne de braquage des roues arrière (boucle ouverte) |
| $\alpha_{2AR}$(rad) : | Correction de la consigne de braquage des roues arrière (anti-renversement / rétroaction) |
| $\alpha_{2C}$(rad) : | Consigne de braquage totale des roues arrière |
| V(m/s) : | Vitesse du véhicule |
| $\gamma_t$(m/s²) : | Accélération transversale du véhicule, mesurée au centre de gravité G du véhicule. |
| $\gamma_l$(m/s²) : | Accélération longitudinale du véhicule, mesurée au centre de gravité G du véhicule. |
| $F_{zi}$(N) : | Effort vertical à la roue i |
| h(m) : | Hauteur du centre de gravité du véhicule |
| $e_1$(m) : | Voie avant du véhicule |
| $e_2$(m) : | Voie arrière du véhicule |
| $k_{av}$ : | Répartition anti-roulis avant |
| $k_{av}$ : | Répartition anti-roulis arrière |
| t(s) : | temps courant |
| Te(s) : | Période d'échantillonnage |
| g(m/s²) : | Gravité |

En considérant un virage à gauche, lors duquel l'accélération transversale $\gamma_t$ est positive, les efforts verticaux appliqués aux roues intérieures au virage, c'est-à-dire les roues 4 et 6, sont surveillés. Lorsqu'un de ces deux efforts s'annule, la roue considérée se décolle. Pour prendre une marge de sécurité, on introduit un premier $S_1$ constant, ou pouvant dépendre de la vitesse V du véhicule 1, pour une précision améliorée. Un risque de décollement de roues est détecté si :

$$F_{ZGAUCHE} = \min(F_{Z4}, F_{Z6}) \le S_1$$

Autrement dit si :

$$\min\left(\left(-\frac{k_{av}}{e_1}\left(hM\gamma_t\right) - \frac{hM\gamma_l}{2L} + \frac{L_2 Mg}{2L}\right), \left(-\frac{k_{ar}}{e_2}\left(hM\gamma_t\right) + \frac{hM\gamma_l}{2L} + \frac{L_1 Mg}{2L}\right)\right) \le S_1$$

Dans ce cas, l'indicateur de risque FlagActivation prend la valeur 1.
L'indicateur FlagActivation garde la valeur 1 tant que :

$$\min\left(\left(-\frac{k_{av}}{e_1}\left(hM\gamma_t\right) - \frac{hM\gamma_l}{2L} + \frac{L_2 Mg}{2L}\right), \left(-\frac{k_{ar}}{e_2}\left(hM\gamma_t\right) + \frac{hM\gamma_l}{2L} + \frac{L_1 Mg}{2L}\right)\right) \le S_2$$

Le deuxième seuil $S_2$ est un seuil pouvant être constant, ou dépendant de la vitesse V du véhicule 1. A titre d'exemple, on peut choisir $S_2=S_1+S_1/10$. Au-delà de ce deuxième seuil $S_2$, l'indicateur FlagActivation prend la valeur 2.

L'indicateur FlagActivation garde la valeur 2 tant que :

$$\min\left(\left(-\frac{k_{av}}{e_1}(hM\gamma_t)-\frac{hM\gamma_1}{2L}+\frac{L_2Mg}{2L}\right),\left(-\frac{k_{ar}}{e_2}(hM\gamma_t)+\frac{hM\gamma_1}{2L}+\frac{L_1Mg}{2L}\right)\right)\leq S_3$$

Le troisième seuil $S_3$ peut être constant, ou dépendant de la vitesse V du véhicule 1. A titre d'exemple, on peut choisir $S_3=S_2+S_1/10$. Au-delà de ce troisième seuil $S_3$, l'indicateur FlagActivation prend la valeur 0.

De la même façon, pour un virage à droite, pour lequel l'accélération transversale $\gamma_t$ est négative, les efforts verticaux appliqués aux roues 3 et 5 sont surveillés. Un risque de décollement de roue est détecté si :

$$F_{ZDROITE} = \min(F_{Z3},F_{Z5}) \leq S_1$$

Autrement dit si :

$$\min\left(\left(+\frac{k_{av}}{e_1}(hM\gamma_t)-\frac{hM\gamma_1}{2L}+\frac{L_2Mg}{2L}\right)\left(+\frac{k_{ar}}{e_2}(hM\gamma_t)+\frac{hM\gamma_1}{2L}+\frac{L_1Mg}{2L}\right)\right)\leq S_1$$

L'indicateur de risque FlagActivation prend la valeur -1.

L'indicateur FlagActivation garde la valeur -1 tant que :

$$\min\left(\left(+\frac{k_{av}}{e_1}(hM\gamma_t)-\frac{hM\gamma_1}{2L}+\frac{L_2Mg}{2L}\right)\left(+\frac{k_{ar}}{e_2}(hM\gamma_t)+\frac{hM\gamma_1}{2L}+\frac{L_1Mg}{2L}\right)\right)\leq S_2$$

Au-delà du deuxième seuil $S_2$, l'indicateur FlagActivation prend la valeur -2, et garde la valeur -2 tant que :

$$\min\left(\left(+\frac{k_{av}}{e_1}(hM\gamma_t)-\frac{hM\gamma_1}{2L}+\frac{L_2Mg}{2L}\right)\left(+\frac{k_{ar}}{e_2}(hM\gamma_t)+\frac{hM\gamma_1}{2L}+\frac{L_1Mg}{2L}\right)\right)\leq S_3$$

Au-delà du troisième seuil $S_3$, l'indicateur FlagActivation reprend la valeur 0.

La sélection du plus petit des efforts verticaux appliqués aux roues intérieures au virage est effectuée par le module de sélection 42, et la comparaison avec les trois seuils $S_1$, $S_2$, et $S_3$ est effectuée par le module de comparaison 43.

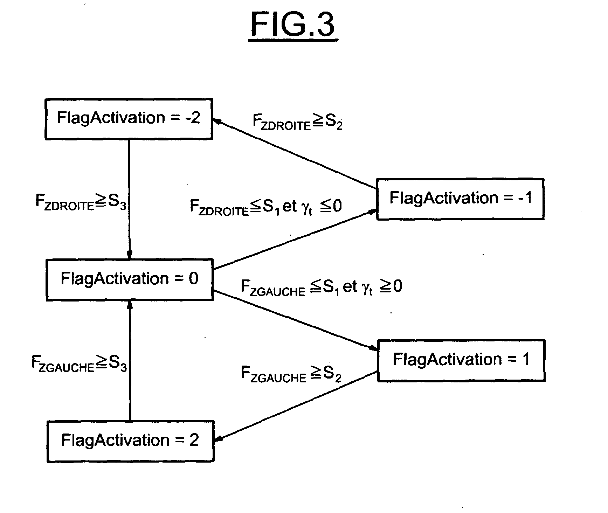

Les transitions de valeurs de l'indicateur FlagActivation de risque de décollement d'une roue intérieure à un virage effectué par le véhicule sont résumées de manière schématique sur la figure 3.

En variante, le module de détection 29 ne tient pas compte de l'accélération longitudinale $\gamma_1$, dans les équations précédentes ($\gamma_l = 0$). La mise en oeuvre du module de détection 29 est alors simplifiée.

En outre, grâce à la connexion optionnelle 35 fournissant la vitesse V du véhicule 1 au module d'élaboration 23 de la correction de la consigne de braquage des roues arrière 5 et 6, ce dernier peut tenir compte d'une condition supplémentaire sur la vitesse V du véhicule pour permettre à l'indicateur FlagActivation de représenter un risque important de décollement d'une roue intérieure à un virage, c'est-à-dire 1 ou -1. La condition supplémentaire est, par exemple que la vitesse V du véhicule 1 doit être supérieure à une vitesse de seuil $V_1$. La précision du système est ainsi améliorée.

Le module d'élaboration 23 d'une correction $\alpha_{2AR}$ de la consigne de braquage $\alpha_{2BO}$ des roues arrière 5 et 6 utilise une correction dépendant de la valeur de l'indicateur de risque FlagActivation, comme suit.

Lorsque l'indicateur FlagActivation vaut 1, représentant un risque important de décollement d'une roue intérieure à un virage à gauche, la correction de braquage $\alpha_{2AR}$ est progressivement augmentée de sorte que :

$$\alpha_{2AR}\left(t - T_e\right) + \delta \cdot T_e \langle \text{Sat} \Rightarrow \alpha_{2AR}\left(t\right) = \alpha_{2AR}\left(t - T_e\right) + \delta \cdot T_e$$

$$\alpha_{2AR}\left(t - T_e\right) + \delta \cdot T_e \geq \text{Sat} \Rightarrow \alpha_{2AR}\left(t\right) = \text{Sat}$$

avec :

Sat : angle maximum autorisé pour contrer le décollement de roue (par exemple Sat=3°).
$\delta$ : vitesse du braquage anti-renversement (par exemple 5°/s). Ce paramètre peut aussi être choisi dépendant de la vitesse V du véhicule 1 suivant une cartographie prédéterminée.

Lorsque l'indicateur FlagActivation vaut 2 ou -2, représentant un faible risque de décollement d'une roue intérieure à un virage à gauche ou à droite, la consigne de braquage est stabilisée de sorte que :

$$\alpha_{2AR}\left(t\right) = \alpha_{2AR}\left(t - T_e\right)$$

Lorsque l'indicateur FlagActivation vaut -1, représentant un risque important de décollement d'une roue intérieure à un virage à droite, la consigne de braquage est progressivement diminuée de sorte que :

$$\alpha_{2AR}\left(t - T_e\right) - \delta \cdot T_e \rangle - \text{Sat} \Rightarrow \alpha_{2AR}\left(t\right) = \alpha_{2AR}\left(t - T_e\right) - \delta \cdot T_e$$

$$\alpha_{2AR}\left(t - T_e\right) - \delta \cdot T_e \leq -\text{Sat} \Rightarrow \alpha_{2AR}\left(t\right) = -\text{Sat}$$

Enfin, lorsque l'indicateur FlagActivation vaut 0, représentant aucun risque de décollement d'une roue intérieure à un virage à gauche ou à droite, la consigne de braquage est remise à zéro progressivement :

$$\left|\alpha_{2AR}\left(t - T_e\right) - \omega \cdot T_e \cdot \text{sign}\left(\alpha_{2AR}\left(t - T_e\right)\right)\right\rangle \varepsilon \Rightarrow \alpha_{2AR}\left(t\right) = \alpha_{2AR}\left(t - T_e\right) - \omega \cdot T_e \cdot \text{sign}\left(\alpha_{2AR}\left(t - \right.\right.$$
$$\left|\alpha_{2AR}\left(t - T_e\right) - \omega \cdot T_e \cdot \text{sign}\left(\alpha_{2AR}\left(t - T_e\right)\right)\right| \leq \varepsilon \Rightarrow \alpha_{2AR}\left(t\right) = 0$$

avec :

$\omega$ : vitesse du débraquage (par exemple 1°/s). Ce paramètre peut aussi être choisi dépendant de la vitesse V du véhicule suivant une cartographie prédéterminée.
$\varepsilon$ : valeur à partir de laquelle on considère le débraquage terminé (par exemple 0,01°).
Sign(x) représente la fonction fournissant le signe de x.

La présente invention permet de commander le braquage des roues arrière d'un véhicule équipé de quatre roues directrices en diminuant fortement les risques de décollement des roues intérieures à un virage ainsi que les risques de renversement du véhicule.

**Revendications**

1. Système de commande de braquage des roues arrière (5, 6) d'un véhicule automobile (1) muni de quatre roues directrices (3, 4, 5, 6), comprenant des moyens d'élaboration (22) d'une consigne de braquage ($\alpha_{2BO}$) des roues arrière du véhicule (1), et des moyens d'élaboration (23) d'une correction ($\alpha_{2AR}$) de ladite consigne de braquage ($\alpha_{2BO}$) des roues arrière (5, 6) à partir de premiers paramètres comprenant un indicateur (FlagActivation) de risque de décollement d'une roue intérieure à un virage effectué par le véhicule (1), **caractérisé en ce qu'**il comprend , en outre, des moyens de détection (29) d'un risque de décollement d'une roue intérieure à un virage effectué par le véhicule (1), délivrant en sortie ledit indicateur (FlagActivation) de risque de décollement d'une roue intérieure au virage, et comprenant des moyens de détermination (41) des efforts verticaux appliqués aux roues (3, 4, 5, 6) du véhicule (1) à partir de deuxièmes paramètres comprenant l'accélération transversale ($\gamma_t$) du véhicule (1) transmise par rétroaction par des moyens de détermination (15) de l'accélération transversale ($\gamma_t$) du véhicule (1), des moyens de sélection (42) du plus petit des efforts verticaux appliqués aux roues intérieures audit virage, et des moyens de comparaison (43) de ladite sélection avec trois seuils ($S_1$, $S_2$, $S_3$).

2. Système selon la revendication 1, dans lequel lesdits premiers paramètres comprennent, en outre, la vitesse (V) du véhicule (1) transmise par des moyens de détermination (13) de la vitesse (V) du véhicule (1).

3. Système selon la revendication 2, dans lequel lesdits deuxièmes paramètres comprennent, en outre, l'accélération longitudinale ($\gamma_1$) du véhicule (1), transmise par des moyens de détermination (14) de l'accélération longitudinale ($\gamma_1$) du véhicule (1).

4. Système selon la revendication 2 ou 3, dans laquelle lesdits trois seuils ($S_1$, $S_2$, $S_3$) dépendent de la vitesse (V) du véhicule (1).

5. Système selon la revendication 4, dans lequel ledit indicateur (FlagActivation) comprend cinq valeurs de risque de décollement d'une roue intérieure à un virage, correspondant respectivement à un faible risque de décollement d'une roue intérieure à un virage à gauche, un risque important de décollement d'une roue intérieure à un virage à gauche, un faible risque de décollement d'une roue intérieure à un virage à droite, un risque important de décollement d'une roue intérieure à un virage à droite, et aucun risque de décollement d'une roue intérieure à un virage.

6. Système selon la revendication 5, dans lequel lesdits moyens d'élaboration (23) d'une correction de ladite consigne de braquage sont adaptés pour élaborer une correction ($\alpha_{2AR)}$ de ladite consigne de braquage ($\alpha_{2BO}$) de sorte que :

   - lorsque lesdits moyens de détection (29) d'un risque de décollement détectent un risque important de décollement d'une roue intérieure à un virage à gauche, lesdits moyens d'élaboration (23) d'une correction de ladite consigne de braquage élaborent une correction ($\alpha_{2AR}$) augmentant avec l'écoulement du temps,
   - lorsque lesdits moyens de détection (29) d'un risque de décollement détectent un risque important de décollement d'une roue intérieure à un virage à droite, lesdits moyens d'élaboration (23) d'une correction de ladite consigne de braquage élaborent une correction ($\alpha_{2AR}$) diminuant avec l'écoulement du temps,
   - lorsque lesdits moyens de détection (29) d'un risque de décollement détectent un faible risque de décollement d'une roue intérieure à un virage à droite ou à gauche, lesdits moyens d'élaboration (23) d'une correction de ladite consigne de braquage élaborent une correction ($\alpha_{2AR}$) stable avec l'écoulement du temps, et
   - lorsque lesdits moyens de détection (29) d'un risque de décollement ne détectent aucun risque de décollement d'une roue intérieure à un virage à droite ou à gauche, lesdits moyens d'élaboration (23) d'une correction de ladite consigne de braquage élaborent une correction ($\alpha_{2AR}$) s'annulant avec l'écoulement du temps.

7. Système selon la revendication 6, dans lequel lesdits moyens d'élaboration (23) d'une correction de ladite consigne de braquage sont adaptés pour élaborer une correction ($\alpha_{2AR}$) de ladite consigne de braquage ($\alpha_{2BO}$) lorsque lesdits moyens de détection (29) d'un risque de décollement détectent un risque important de décollement d'une roue intérieure à un virage à gauche ou à droite à condition que la vitesse (V) du véhicule (1) soit supérieure à une vitesse de seuil ($V_1$).

8. Véhicule automobile comprenant un châssis, et muni de quatre roues directrices reliées élastiquement au châssis, et un système de commande de braquage des roues arrière (5, 6) selon l'une des revendications 1 à 7.

9. Procédé de commande de braquage des roues arrières (5, 6) d'un véhicule automobile (1) muni de quatre roues directrices (3, 4, 5, 6), dans lequel on élabore une consigne de braquage ($\alpha_{2BO}$) des roues arrière (5, 6) du véhicule (1), et on élabore une correction ($\alpha_{2AR}$) de ladite consigne de braquage ($\alpha_{2BO}$) des roues arrière (5, 6) à partir de premiers paramètres comprenant un indicateur (FlagActivation) de risque de décollement d'une roue intérieure à un virage effectué par le véhicule (1), **caractérisé en ce que** l'
on détecte un risque de décollement d'une roue intérieure à un virage effectué par le véhicule (1), on détermine dés efforts verticaux appliqués aux roues (3, 4, 5, 6) du véhicule (1) à partir de deuxièmes paramètres comprenant l'accélération transversale ($\gamma_t$) du véhicule (1)
transmise par rétroaction, on sélectionne le plus petit des efforts verticaux appliqués aux roues intérieures audit virage, et on compare ladite sélection avec trois seuils ($S_1$, $S_2$, $S_3$).

**Claims**

1.  System for controlling the steering of the rear wheels (5, 6) of a motor vehicle (1) furnished with four steered wheels (3, 4, 5, 6), comprising means (22) for generating a steering setpoint ($\alpha_{2BO}$) of the rear wheels of the vehicle (1), and means (23) for generating a correction ($\alpha_{2AR}$) of the said steering setpoint ($\alpha_{2BO}$) of the rear wheels (5, 6) based on first parameters comprising an indicator (FlagActivation) of risk of lifting of an inner wheel at a corner taken by the vehicle (1), **characterized in that** it also comprises means (29) for detecting a risk of lifting of an inner wheel at a corner taken by the vehicle (1), delivering as an output the said indicator (FlagActivation) of risk of lifting of an inner wheel at the corner, and comprising means (41) for determining the vertical forces applied to the wheels (3, 4, 5, 6) of the vehicle (1) based on second parameters comprising the transverse acceleration ($\gamma_t$) of the vehicle (1) transmitted by feedback by means (15) for determining the transverse acceleration ($\gamma_t$) of the vehicle (1), means (42) for selecting the smallest of the vertical forces applied to the inner wheels at the said corner, and means (43) for comparing the said selection with three thresholds ($S_1$, $S_2$, $S_3$).

2.  System according to Claim 1, in which the said first parameters also comprise the speed (V) of the vehicle (1) transmitted by means (13) for determining the speed (V) of the vehicle (1).

3.  System according to Claim 2, in which the said second parameters also comprise the longitudinal acceleration ($\gamma_1$) of the vehicle (1), transmitted by means (14) for determining the longitudinal acceleration ($\gamma_1$) of the vehicle (1).

4.  System according to Claim 2 or 3, in which the said three thresholds ($S_1$, $S_2$, $S_3$) depend on the speed (V) of the vehicle (1).

5.  System according to Claim 4, in which the said indicator (FlagActivation) comprises five values of risk of lifting of an inner wheel at a corner, corresponding respectively to a low risk of lifting of an inner wheel at a left hand corner, a considerable risk of lifting of an inner wheel at a left hand corner, a low risk of lifting of an inner wheel at a right hand corner, a considerable risk of lifting of an inner wheel at a right hand corner, and no risk of lifting of an inner wheel at a corner.

6.  System according to Claim 5, in which the said means (23) for generating a correction of the said steering setpoint are suitable for generating a correction ($\alpha_{2AR}$) of the said steering setpoint ($\alpha_{2BO}$) so that:

    - when the said means (29) for detecting a risk of lifting detect a considerable risk of lifting of an inner wheel at a left hand corner, the said means (23) for generating a correction of the said steering setpoint generate a correction ($\alpha_{2AR}$) increasing with the elapse of time,
    - when the said means (29) for detecting a risk of lifting detect a considerable risk of lifting of an inner wheel at a right hand corner, the said means (23) for generating a correction of the said steering setpoint generate a correction ($\alpha_{2AR}$) reducing with the elapse of time,
    - when the said means (29) for detecting a risk of lifting detect a low risk of lifting of an inner wheel at a right hand or left hand corner, the said means (23) for generating a correction of the said steering setpoint generate a correction ($\alpha_{2AR}$) that is stable with the elapse of time, and
    - when the said means (29) for detecting a risk of lifting detect no risk of lifting of an inner wheel at a right hand or left hand corner, the said means (23) for generating a correction of the said steering setpoint generate a correction ($\alpha_{2AR}$) that cancels out with the elapse of time.

7.  System according to Claim 6, in which the said means (23) for generating a correction of the said steering setpoint are suitable for generating a correction ($\alpha_{2AR}$) of the said steering setpoint ($\alpha_{2BO}$) when the said means (29) for detecting a risk of lifting detect a considerable risk of lifting of an inner wheel at a left hand or right hand corner provided that the speed (V) of the vehicle (1) is higher than a threshold speed ($V_1$).

8. Motor vehicle comprising a chassis and furnished with four steered wheels connected elastically to the chassis, and a system for controlling the steering of the rear wheels (5, 6) according to one of Claims 1 to 7.

9. Method for controlling the steering of the rear wheels (5, 6) of a motor vehicle (1) furnished with four steered wheels (3, 4, 5, 6) in which a steering setpoint ($\alpha_{2BO}$) of the rear wheels (5, 6) of the vehicle (1) is generated, and a correction ($\alpha_{2AR}$) of the said steering setpoint ($\alpha_{2BO}$) of the rear wheels (5, 6) is generated based on first parameters comprising an indicator (FlagActivation) of risk of lifting of an inner wheel at a corner taken by the vehicle (1), **characterized in that** a risk of lifting of an inner wheel at a corner taken by the vehicle (1) is detected, vertical forces applied to the wheels (3, 4, 5, 6) of the vehicle (1) are determined based on second parameters comprising the transverse acceleration ($\gamma_t$) of the vehicle (1) transmitted by feedback, the smallest of the vertical forces applied to the inner wheels at the said corner is selected, and the said selection is compared with three thresholds ($S_1$, $S_2$, $S_3$).

**Patentansprüche**

1. System zur Steuerung des Lenkeinschlags der Hinterräder (5, 6) eines mit vier gelenkten Rädern (3, 4, 5, 6) versehenen Kraftfahrzeugs (1), das Einrichtungen (22) zur Erarbeitung eines Lenkeinschlagsollwerts ($\alpha_{2BO}$) der Hinterräder des Fahrzeugs (1) und Einrichtungen (23) zur Erarbeitung einer Korrektur ($\alpha_{2AR}$) des Lenkeinschlagsollwerts ($\alpha_{2BO}$) der Hinterräder (5, 6) ausgehend von ersten Parametern enthält, die einen Anzeiger (FlagActivation) einer Abhebegefahr eines kurveninneren Rads in einer vom Fahrzeug (1) gefahrenen Kurve enthalten, **dadurch gekennzeichnet, dass** es
außerdem Einrichtungen (29) zur Erfassung einer Abhebegefahr eines kurveninneren Rads in einer vom Fahrzeug (1) gefahrenen Kurve enthält, die am Ausgang den Anzeiger (FlagActivation) einer Abhebegefahr eines kurveninneren Rads liefern und Einrichtungen (41) zur Bestimmung der an die Räder (3, 4, 5, 6) des Fahrzeugs (1) angewendeten senkrechten Kräfte ausgehend von zweiten Parametern, die die Querbeschleunigung ($\gamma_t$) des Fahrzeugs (1) enthalten, die durch Rückkopplung durch Einrichtungen (15) zur Bestimmung der Querbeschleunigung ($\gamma_t$) des Fahrzeugs (1) übertragen wird, Einrichtungen (42) zur Auswahl der geringsten der an die kurveninneren Räder angewendeten senkrechten Kräfte und Einrichtungen (43) zum Vergleich der Auswahl mit drei Schwellwerten ($S_1$, $S_2$, $S_3$) enthalten.

2. System nach Anspruch 1, bei dem die ersten Parameter außerdem die Geschwindigkeit (V) des Fahrzeugs (1) enthalten, die von Einrichtungen (13) zur Bestimmung der Geschwindigkeit (V) des Fahrzeugs (1) übertragen wird.

3. System nach Anspruch 2, bei dem die zweiten Parameter außerdem die Längsbeschleunigung ($\gamma_l$) des Fahrzeugs (1) enthalten, die von Einrichtungen (14) zur Bestimmung der Längsbeschleunigung ($\alpha_l$) des Fahrzeugs (1) übertragen wird.

4. System nach Anspruch 2 oder 3, bei dem die drei Schwellwerte ($S_1$, $S_2$, $S_3$) von der Geschwindigkeit (V) des Fahrzeugs (1) abhängen.

5. System nach Anspruch 4, bei dem der Anzeiger (FlagActivation) fünf Abhebegefahrenwerte eines kurveninneren Rads enthält, die einer geringen Abhebegefahr eines linkskurveninneren Rads, einer großen Abhebegefahr eines linkskurveninneren Rads, einer geringen Abhebegefahr eines rechtskurveninneren Rads, einer großen Abhebegefahr eines rechtskurveninneren Rads, bzw. keiner Abhebegefahr eines kurveninneren Rads entsprechend.

6. System nach Anspruch 5, bei dem die Einrichtungen (23) zur Erarbeitung einer Korrektur des Lenkeinschlagsollwerts geeignet sind, um eine derartige Korrektur ($\alpha_{2AR}$) des Lenkeinschlagsollwerts ($\alpha_{2BO}$) zu erarbeiten, dass:

- wenn die Einrichtungen (29) zur Erfassung einer Abhebegefahr eine große Abhebegefahr eines linkskurveninneren Rads erfassen, die Einrichtungen (23) zur Erarbeitung einer Korrektur des Lenkeinschlagsollwerts eine Korrektur ($\alpha_{2AR}$) erarbeiten, die im Lauf der Zeit zunimmt,
- wenn die Einrichtungen (29) zur Erfassung einer Abhebegefahr eine große Abhebegefahr eines rechtskurveninneren Rads erfassen, die Einrichtungen (23) zur Erarbeitung einer Korrektur des Lenkeinschlagsollwerts eine Korrektur ($\alpha_{2AR}$) erarbeiten, die im Lauf der Zeit abnimmt,
- wenn die Einrichtungen (29) zur Erfassung einer Abhebegefahr eine geringe Abhebegefahr eines rechts- oder linkskurveninneren Rads erfassen, die Einrichtungen (23) zur Erarbeitung einer Korrektur des Lenkeinschlagsollwerts eine im Lauf der Zeit stabile Korrektur ($\alpha_{2AR}$) erarbeiten, und

- wenn die Einrichtungen (29) zur Erfassung einer Abhebegefahr keine Abhebegefahr eines rechts- oder linkskurveninneren Rads erfassen, die Einrichtungen (23) zur Erarbeitung einer Korrektur des Lenkeinschlagsollwerts eine Korrektur ($\alpha_{2AR}$) erarbeiten, die sich im Lauf der Zeit annulliert.

7. System nach Anspruch 6, bei dem die Einrichtungen (23) zur Erarbeitung einer Korrektur des Lenkeinschlagsollwerts geeignet sind, um eine Korrektur ($\alpha_{2AR}$) des Lenkeinschlagsollwerts ($\alpha_{2BO}$) zu erarbeiten, wenn die Einrichtungen (29) zur Erfassung einer Abhebegefahr eine große Abhebegefahr eines links- oder rechtskurveninneren Rads erfassen, vorausgesetzt, die Geschwindigkeit (V) des Fahrzeugs (1) ist höher als eine Schwellwertgeschwindigkeit ($V_1$).

8. Kraftfahrzeug, das ein Fahrgestell enthält und mit vier gelenkten Rädern ausgestattet ist, die elastisch mit dem Fahrgestell verbunden sind, und ein System zur Lenkeinschlagsteuerung der Hinterräder (5, 6) nach einem der Ansprüche 1 bis 7 enthält.

9. Verfahren zur Steuerung des Lenkeinschlags der Hinterräder (5, 6) eines mit vier gelenkten Rädern (3, 4, 5, 6) ausgestatteten Kraftfahrzeugs (1), bei dem ein Lenkeinschlagsollwert ($\alpha_{2BO}$) der Hinterräder (5, 6) des Fahrzeugs (1) erarbeitet wird, und eine Korrektur ($\alpha_{2AR}$) des Lenkeinschlagsollwerts ($\alpha_{2BO}$) der Hinterräder (5, 6) ausgehend von ersten Parametern erarbeitet wird, die einen Anzeiger (FlagActivation) einer Abhebegefahr eines kurveninneren Rads bei einer vom Fahrzeug (1) gefahrenen Kurve enthalten, **dadurch gekennzeichnet, dass** eine Abhebegefahr eines kurveninneren Rads in einer vom Fahrzeug (1) gefahrenen Kurve erfasst wird, dass an die Räder (3, 4, 5, 6) des Fahrzeugs (1) angewendete senkrechte Kräfte ausgehend von zweiten Parametern bestimmt werden, die die Querbeschleunigung ($\gamma_t$) des Fahrzeugs (1) enthalten, die durch Rückkopplung übertragen wird, dass die kleinste der an die kurveninneren Räder angewendeten Kräfte ausgewählt wird, und dass die Auswahl mit drei Schwellwerten ($S_1$, $S_2$, $S_3$) verglichen wird.

# FIG.1

FIG.2

# FIG.3

FlagActivation = -2

$F_{ZDROITE} \geqq S_2$

$F_{ZDROITE} \geqq S_3$

$F_{ZDROITE} \leqq S_1$ et $\gamma_t \leqq 0$

FlagActivation = -1

FlagActivation = 0

$F_{ZGAUCHE} \leqq S_1$ et $\gamma_t \geqq 0$

$F_{ZGAUCHE} \geqq S_3$

$F_{ZGAUCHE} \geqq S_2$

FlagActivation = 1

FlagActivation = 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0376306 A
- FR 0314929
- EP 1544080 A
- EP 1386805 A